(19) **Europäisches Patentamt**

**European Patent Office**

**Office européen des brevets**

(11) **EP 0 852 879 B1**

(12) **EUROPEAN PATENT SPECIFICATION**

(45) Date of publication and mention
of the grant of the patent:
**12.12.2001 Bulletin 2001/50**

(21) Application number: **96932690.9**

(22) Date of filing: **27.09.1996**

(51) Int Cl.⁷: **H04N 5/208**

(86) International application number:
**PCT/GB96/02402**

(87) International publication number:
**WO 97/12482 (03.04.1997 Gazette 1997/15)**

(54) **VIDEO SIGNAL PROCESSING**

VIDEOSIGNALVERARBEITUNG

TRAITEMENT DE SIGNAUX VIDEO

(84) Designated Contracting States:
**AT BE CH DE DK ES FR GB IE IT LI NL SE**

(30) Priority: **28.09.1995 GB 9519767**

(43) Date of publication of application:
**15.07.1998 Bulletin 1998/29**

(73) Proprietor: **SNELL & WILCOX LIMITED**
**Twickenham, Middlesex TW1 1RQ (GB)**

(72) Inventors:
• **WESTON, Martin**
**Petersfield, Hampshire GU39 4SS (GB)**
• **STEINBERG, Avigdor**
**Petersfield, Hampshire GU32 3LS (GB)**

(74) Representative: **Garratt, Peter Douglas et al**
**Mathys & Squire**
**100 Grays Inn Road**
**London WC1X 8AL (GB)**

(56) References cited:
**EP-A- 0 505 999         US-A- 5 404 180**

• **PATENT ABSTRACTS OF JAPAN vol. 14, no. 524**
**(E-1003), 16 November 1990 & JP,A,02 222267**
**(TOSHIBA), 5 September 1990,**

EP 0 852 879 B1

**Description**

This invention relates to the processing of analogue and digital video signals and is particularly concerned with restoration of picture sharpness, ie. with recovery of wanted high frequency signal components lost or reduced in the process of video recording or transmission. Traditionally, such processing is known as aperture correction or edge enhancement.

A well known enhancement technique is to determine the second differential of the signal, multiply it by a coefficient (which determines the degree of correction) and add the result to the input signal. The frequency response of such an enhancer is linked to its pulse response by the well-known Fourier transform. A fundamental limitation of this kind of enhancer is that it is impossible to boost the high frequency components without visible and annoying overshoots in the pulse and step responses.

There is another known, non-linear edge enhancement technique based on the synthesis of high frequency components by extension of the low-frequency part of the signal spectrum. This approach includes the calculation of the first and second derivatives of an input signal, then multiplication of said first derivative by the clipped second derivative and, finally, summation of the resulting correction signal with the incoming signal. Such processing provides improved pulse response, although the pulse response is not completely free from unwanted overshoots or ripples, and periodic picture textures are degraded.

A specific technique for edge enhancement is disclosed in EP-0-505 999.

An object of one aspect of this invention is to provide an edge enhancer which offers improvement in the sharpness of picture edges. A further object is to provide a peak enhancer, which offers improvement in the contrast of lines and high-frequency textures without visible artefacts. It is a further object to provide an improved enhancer capable of combining both signal steepness correction and "peaking" on sinusoidal textures and the tops of short pulses.

Accordingly, the present invention consists in a method of video signal processing, comprising the steps of forming a difference signal **R** by subtraction between a video signal and the video signal delayed by a time interval; forming a delayed difference signal **L** by delaying the difference signal **R** by a time interval; and deriving an enhancement signal through non-linear combination of said difference signals **L** and **R**, wherein the enhancement signal is constrained to be zero if either **L** or **R** is zero.

Advantageously, the enhancement signal comprises an edge enhancement signal when the polarities of **L** and **R** are the same and a peak enhancement signal when the polarities of the **L** and **R** are different.

It is a still further object of this invention to provide an improved enhancer in the form of a circuit which calculates the best of the output correction signals from several constituent enhancers differing in the size of their "correction windows", ie. the delay between the signal samples involved in the difference signal calculations.

Preferably, the method further comprises the step of deriving a plurality of enhancement signals with respect to different time intervals $T_I$ to $T_N$ and selecting one enhancement signal for use.

Both analogue and digital implementations are possible. Particularly in the case of analogue implementation, the processing can be done in many ways with equivalent results; the variants shown below must be regarded only as examples.

This invention will now be described by way of example with reference to the accompanying drawings in which:

Figure 1 is a general block diagram of an edge and peak enhancer according to the present invention;

Figure 2 is a detailed view of a component used a number of times in the enhancer shown in Figure 1;

Figure 3 is a family of plots illustrating step and pulse responses at important points within the enhancer shown in Figure 1.

Figure 4 is a diagram showing one variant of a digital implementation of the components shown in block form in Figure 1.

Figure 5 is a diagram showing the "multiple windows" variant of the enhancer shown in block form in Figures 1 and 3.

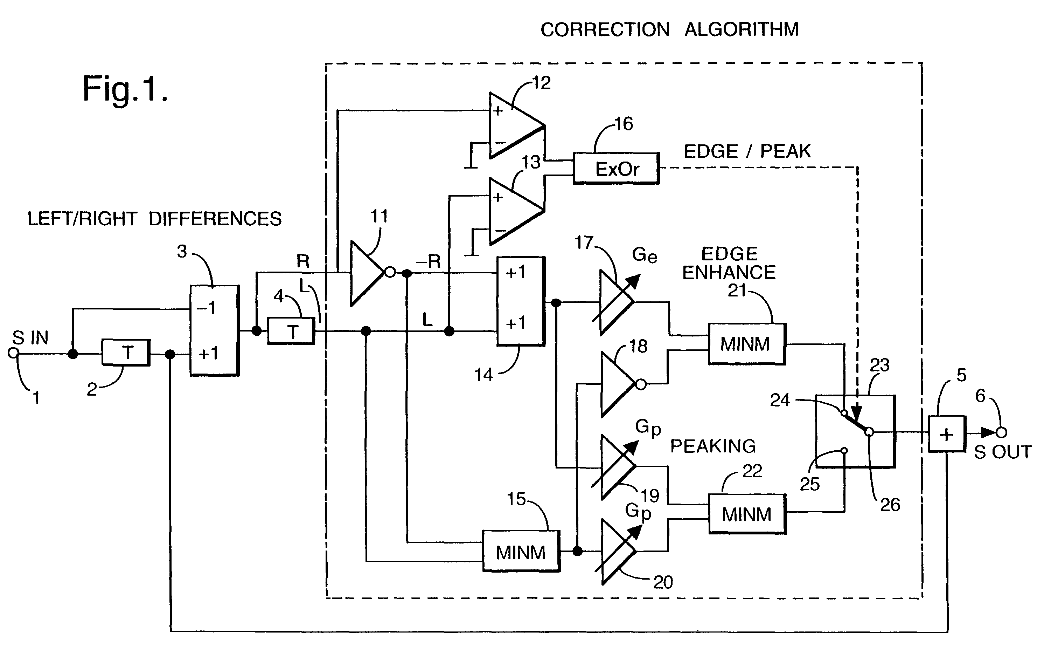

Referring initially to Figure 1, a signal $S_{in}$ at an input terminal 1 passes through a delay line 2 and an adder 5 to an output terminal 6. The output of the delay line 2 is also taken to the non-inverting input of a subtracter 3 which receives the signal $S_{in}$ at its inverting input. In this way, the current slope of this signal is evaluated by the subtracter 3. The difference signal **R** from the output of the subtracter 3 is fed to the input of a second delay line 4, providing at its output the difference signal **L**. The difference signal **R** is also taken to an inverter 11 providing at its output the inverted difference signal -**R**. The **R** and **L** difference signals are compared with zero in respective comparators 12 and 13, for a purpose to be described. They are also fed to the inputs of an adder 14, providing a second derivative signal (**L-R**), and fed to the inputs of a minimum magnitude detector 15.

The minimum magnitude detector provides the function **Minm(A,B)** where:

$$Minm(A,B) = \text{if abs}(A) < \text{abs}(B) \text{ then } A \text{ else } B$$

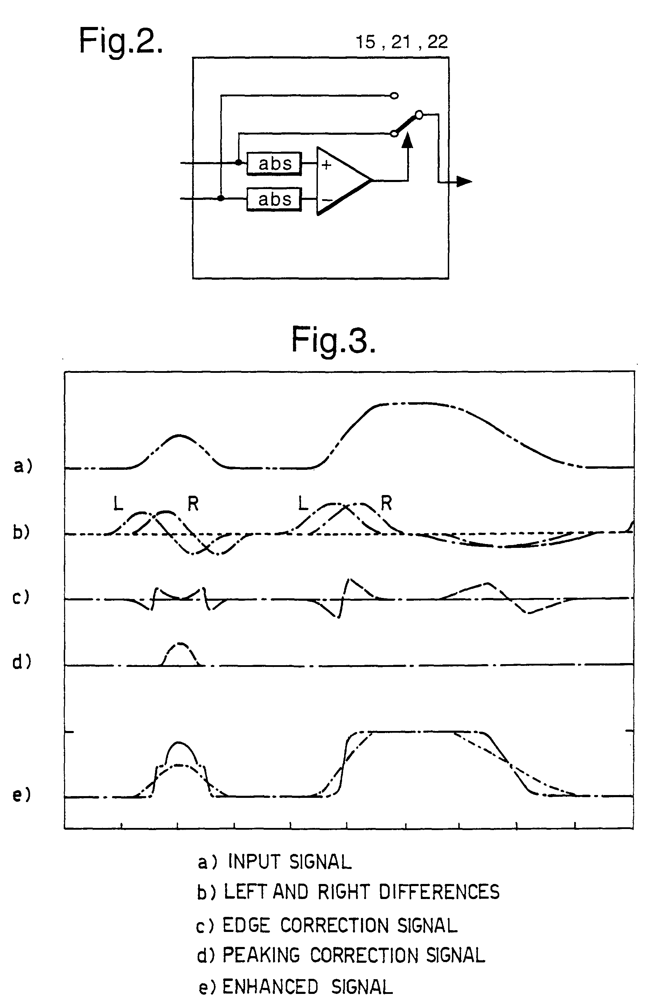

Figure 2 shows one example of a possible implementation of a minimum magnitude detector. It works as follows: a comparator, which is fed by the absolute values of the input signals, controls a switch selection in such a way that the signal with smaller magnitude is selected for further processing.

Returning to Figure 1, the signals from the outputs of the adder 14 and minimum magnitude detector 15 are fed, respectively, through gain control amplifier 17 and inverter 18 to a further minimum magnitude detector 21 to provide an edge correction signal at the terminal 24 of switch 23.

This edge correction signal $\mathbf{C_{edge}}$ takes the form:

$$C_{edge} = Minm (G_e * (L\text{-}R), - Minm (L,\text{-}R))$$

In a similar way the outputs of the adder 14 and minimum magnitude detector 15 are fed, respectively, through gain control amplifiers 19 and 20 to minimum magnitude detector 22 to provide a peaking enhancement signal at the terminal 25 of switch 23. This signal $\mathbf{C_{peak}}$ takes the form:

$$C_{peak} = Minm (0.5 * G_p (L\text{-}R), G_p * Minm (L,\text{-}R))$$

The comparison of the polarities of the L and R signals in the exclusive-or gate 16 provides the control signal for the switch 23 which determines whether "edge" or "peak" correction should be applied. If the polarities are the same, edge correction is applied, if the polarities are different, peak correction.

The degree of "edge" enhancement is set by the gain of the amplifier 17 (indicated as the parameter $\mathbf{G_e}$ in the figure).

The gain of amplifier 19 is required to be half that of amplifier 20. The degree of "peak" enhancement is set by these gains (indicated by the parameter $\mathbf{G_p}$ in the figure).

The complete edge and peak correction signal at the output terminal of switch 26 is added to the input signal in the adder 5 to form the enhanced output signal $\mathbf{S_{out}}$ at the terminal 6.

The correction signal is always a result of a minimum difference selection and so the level of an enhanced transient never exceeds the adjacent flat-area level, which means that overshoots can never occur. Put another way, the enhancement or correction signal is constrained to be zero if either the left or the right difference signal is zero.

Although Figure 1 shows a switch to select between the edge and peak correction signals no discontinuities in the correction signal are introduced when the switch changes state. This is because the comparators feeding the exclusive-or gate only change state at zero crossing of **L** or **R**. When **L** is at zero both inputs to the switch are equal (at a voltage of -**R**) and when **R** is at zero both switch inputs are zero.

Figure 3 shows the shapes of the waveforms at some important points in Figure 1.

Figure 3a shows an input signal consisting of a wide pulse and sine-squared pulse with a rise-time approximately equal to the delay **T** in the delay lines 2 and 4 on Figure 1.

In Figure 3b the **L** and **R** difference (derivative) signals are shown.

In Figure 3c the edge correction signal is shown. Note that when both difference signals are equal the polarity of the correction signal changes. Immediately before and after the polarity change (when the **L** and **R** differences are approximately equal) the signal is controlled by the change of slope of the input signal ie. the signal selected by minimum magnitude selector is the second derivative multiplied by the control parameter $\mathbf{G_e}$.

In Figure 3d the peaking correction signal is shown. This signal exists only where the polarities of **L** and **R** differences are different and reaches its maximum at the top of the pulse.

In Figure 3e the output enhanced signal is shown. Note that when one of the difference signals changes polarity the correction changes between the edge and peak enhancement modes. The important advantage of the enhancer according to the present invention is that the correction signal is cancelled at flat areas, in particular at the baseline of the waveform before and after pulses. Hence there are no unwanted ripples or overshoots.

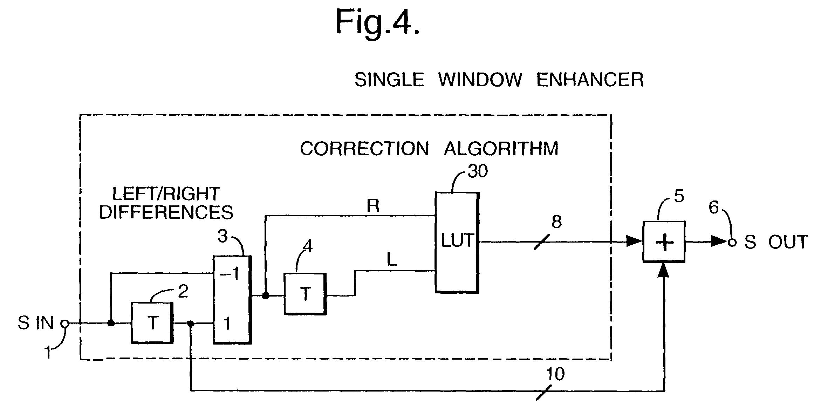

Figure 4 shows a digital implementation of the enhancer. The input signal passes through the blocks 2, 3, 4 and 5, identical to these shown in Figure 1, to the output 6. The two differences signals, **L** and **R**, are fed to the inputs of the look-up table 30. This combines the functions of all the blocks within the dotted line rectangle shown in Figure 1. Because the output of the look-up table is a correction signal, rather than the main path signal, it can be quantised with less levels than the main path, for instance, with 8 bits instead of 10. Obviously, the use of a look-up table for all the non-linear operations makes the digital implementation quite economical and compact.

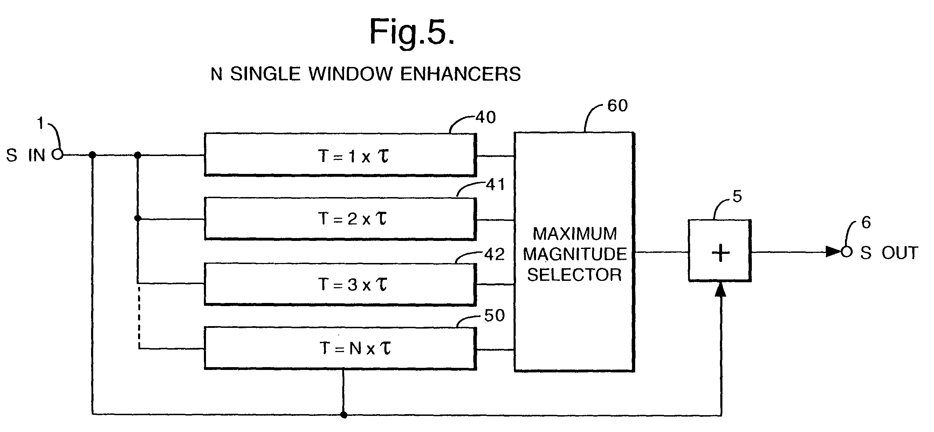

Figure 5 shows an improved enhancer in which the input signal $\mathbf{S_{in}}$ is fed to several primary enhancers 40,

EP 0 852 879 B1

41..50, differing only in the size of correction window T, ie. the delay between signal samples involved in the differences calculation. The outputs of these primary enhancers are combined in a maximum magnitude selector 60 so that the highest level correction signal is always selected, and the enhancer automatically adapts itself to the bandwidth (sharpness) of incoming signal. The implementation of the maximum magnitude selector is similar to the minimum magnitude selector shown in Figure 2.

With digital hardware it is possible to do more than one set of calculations in one sampling interval and so the parallel processing shown may in fact be provided merely by an increase of the system clock rate above the sampling rate and using the part of the hardware several times over.

## Claims

1.  A method of video signal processing, comprising the steps of forming a difference signal **R** by subtraction between a video signal and the video signal delayed by a time interval; forming a delayed difference signal **L** by delaying the difference signal **R** by a time interval; and deriving an enhancement signal through non-linear combination of said difference signals **L** and **R,** wherein the enhancement signal is constrained to be zero if either **L** or **R** is zero.

2.  A method according to Claim 1, wherein the enhancement signal is constrained to be zero if either **L** or **R** is zero, through operation of a function which selects of its arguments that having the minimum absolute value.

3.  A method according to Claim 1 or Claim 2, wherein the enhancement signal comprises an edge enhancement signal when the polarities of **L** and **R** are the same and a peak enhancement signal when the polarities of the **L** and **R** are different.

4.  A method according to any one of the preceding claims, wherein the enhancement signal comprises an edge enhancement signal $\mathbf{C_{edge}}$, where

$$C_{edge} = Minm\ (G_e\ *\ (L\text{-}R),\ \text{-}\ Minm\ (L,\text{-}R))$$

    where $\mathbf{G_e}$ is a parameter controlling the degree of edge enhancement and where the function **Minm** is defined by

$$Minm(A,B) = if\ abs(A) < abs\ (B)\ then\ A\ else\ B.$$

5.  A method according to any one of the preceding claims, wherein the enhancement signal comprises an edge enhancement signal $\mathbf{C_{peak}}$, where

$$C_{peak} = Minm\ (0.5\ *\ G_p\ (L\text{-}R),\ G_p\ *\ Minm\ (L,\text{-}R))$$

    where $\mathbf{G_p}$ is a parameter controlling the degree of peak enhancement and where the function **Minm** is defined by

$$Minm(A,B) = if\ abs(A) < abs\ (B)\ then\ A\ else\ B.$$

6.  A method according to Claim 1, wherein the time interval through which the difference signal **R** is delayed to form the difference signal **L,** is the same as the time interval **T** through which the video signal is delayed in formation of the difference signal **R.**

7.  A method according to Claim 6, comprising the step of deriving a plurality of enhancement signals with respect to different time intervals $\mathbf{T_I}$ to $\mathbf{T_N}$ and selecting one enhancement signal for use.

8.  A method according to Claim 7, wherein the enhancement signal having the largest magnitude is selected for use.

4

**Patentansprüche**

1. Verfahren zum Videosignalverarbeiten, das die folgende Schritte umfasst: ein Differenzsignal R wird durch Subtraktion zwischen einem Videosignal und dem Videosignal, das um ein Zeitintervall verzögert ist, ausgebildet; ein verzögertes Differenzsignal L wird ausgebildet, indem das Differenzsignal R um ein Zeitintervall verzögert wird; und ein Verstärkungssignal bzw. Verbesserungssignal wird durch eine nichtlineale Kombination der Differenzsignale L und R abgeleitet, wobei das Verstärkungssignal bzw. Verbesserungssignal unter der Zwangsbedingung steht bzw. zwangsweise so gestaltet wird, dass es Null ist, falls entweder L oder R Null ist.

2. Verfahren nach Anspruch 1, bei welchem das Verstärkungssignal bzw. Verbesserungssignal unter der Zwangsbedingung steht bzw. zwangsweise so gestaltet wird, dass es Null ist, falls entweder L oder R Null ist, und zwar durch Operation einer Funktion, die aus ihren Argumenten dasjenige auswählt, das den minimalen Absolutwert hat.

3. Verfahren nach Anspruch 1 oder Anspruch 2, bei welchem das Verstärkungs- bzw. Verbesserungssignal ein Kantenverstärkungssignal, wenn die Polaritäten von L und R dieselben sind, und ein Spitzenwertverstärkungssignal bzw. Spitzenverstärkungssignal, wenn die Polaritäten von L und R unterschiedlich sind, umfasst.

4. Verfahren nach irgendeinem der vorhergehenden Ansprüche, bei welchem das Verstärkungssignal bzw. Verbesserungssignal ein Kantenverstärkungssignal $C_{edge}$ umfasst, wobei

$$C_{edge} = Minm(G_e * (L-R), - Minm (L,-R))$$

wobei $G_e$ ein Parameter ist, der den Grad bzw. das Ausmaß der Kantenverstärkung steuert und wobei die Funktion Minm durch folgendes definiert ist:

$$Minm(A,B) = wenn\ abs(A) < abs (B)\ dann\ A\ ansonsten\ B.$$

5. Verfahren nach irgendeinem der vorhergehenden Ansprüche, bei welchem das Verstärkungssignal ein Kantenverstärkungssignal $C_{peak}$ umfasst, wobei

$$C_{peak} = Minm (0.5 * G_p(L-R), G_p * Minm (L,-R))$$

wobei $G_p$ ein Parameter ist, der den Grad der Spitzenwertverstärkung bzw. Spitzenverstärkung steuert und wobei die Funktion Minm durch folgendes definiert ist:

$$Minm(A,B) = falls\ abs(A) < abs(B)\ dann\ A\ ansonsten\ B.$$

6. Verfahren nach Anspruch 1, wobei das Zeitintervall, durch das das Differenzsignal R verzögert wird, um das Differenzsignal L auszubilden, dasselbe ist, wie das Zeitintervall T, durch das das Videosignal bei Ausbildung des Differenzsignals R verzögert wird.

7. Verfahren nach Anspruch 6, das den Schritt umfasst, wonach eine Vielzahl von Verstärkungssignalen bezüglich Differenzzeitintervallen Ti bis $T_N$ abgeleitet werden und ein Verstärkungssignal bzw. Verbesserungssignal zur Verwendung ausgewählt wird.

8. Verfahren nach Anspruch 7, bei welchem das Verstärkungssignal bzw. Verbesserungssignal, das den größten Betrag aufweist, zur Verwendung ausgewählt wird.

**Revendications**

1. Procédé pour le traitement de signaux vidéo, comprenant les étapes consistant à former un signal de différence R par soustraction entre un signal vidéo et le signal vidéo retardé par un intervalle de temps; à former un signal de différence retardé L en retardant le signal de différence R d'un intervalle de temps; et à dériver un signal de rehaussement par le biais de la combinaison non linéaire desdits signaux de différence L et R, dans lequel le signal de rehaussement est contraint d'être zéro si soit L soit R est zéro.

2. Procédé selon la revendication 1, dans lequel le signal de rehaussement est contraint d'être zéro si soit L soit R est zéro, par opération d'une fonction qui choisit parmi ses arguments celui ayant la valeur absolue minimum.

3. Procédé selon la revendication 1 ou la revendication 2, dans lequel le signal de rehaussement de bord lorsque les polarités de L et R sont les mêmes et un signal de rehaussement de pointe lorsque les polarités de L et R sont différentes.

4. Procédé selon l'une quelconque des revendications précédentes, dans lequel le signal de rehaussement comprend un signal de rehaussement de bord $C_{edge}$ où

$$C_{edge} = Minm (G_e * (L-R), - Minm \; L,-R)$$

où $G_e$ est un paramètre commandant le degré de rehaussement de bord et où la fonction Minm est définie par

$$Minm(A,B) = si \; abs(A) < abs(B) \; alors \; A \; sinon \; B.$$

5. Procédé selon l'une quelconque des revendications précédentes, dans lequel le signal de rehaussement comprend un signal de rehaussement de bord $C_{peak}$, où

$$C_{peak} = Minm (0,5* G_p(L-R), G_p* Minm (L, -R)$$

où $G_p$ est un paramètre commandant le degré de rehaussement de pointe et où la fonction Minm est définie par

$$Minm(A,B) = si \; abs(A) < abs(B) \; alors \; A \; sinon \; B.$$

6. Procédé selon la revendication 1, dans lequel l'intervalle de temps par lequel le signal de différence est retardé pour former le signal de différence L, est le même que l'intervalle de temps T par lequel le signal vidéo est retardé dans la formation du signal de différence R.

7. Procédé selon la revendication 6, comprenant l'étape consistant à dériver une pluralité de signaux de rehaussement par rapport à différents intervalles de temps $T_I$ à $T_N$ et à choisir un signal de rehaussement pour l'utilisation.

8. Procédé selon la revendication 7, dans lequel on choisit le signal de rehaussement ayant la grandeur maximum.

Fig.1.

CORRECTION ALGORITHM

EDGE / PEAK

LEFT/RIGHT DIFFERENCES

EDGE ENHANCE

PEAKING

EP 0 852 879 B1

# Fig.2.

15 , 21 , 22

# Fig.3.

a) INPUT SIGNAL

b) LEFT AND RIGHT DIFFERENCES

c) EDGE CORRECTION SIGNAL

d) PEAKING CORRECTION SIGNAL

e) ENHANCED SIGNAL

# Fig.4.

SINGLE WINDOW ENHANCER

EP 0 852 879 B1

# Fig.5.

## N SINGLE WINDOW ENHANCERS

S IN — 1

40 — T = 1 x τ

41 — T = 2 x τ

42 — T = 3 x τ

50 — T = N x τ

60 — MAXIMUM MAGNITUDE SELECTOR

5 — +

6 — S OUT

EP 0 852 879 B1